# EUROPEAN PATENT APPLICATION

(11) **EP 2 457 632 A1**
(43) Date of publication of application: **30.05.2012**
(21) Application number: 11189295.6
(22) Date of filing: 16.11.2011
(51) Int. Cl.: B01D 45/06, B64D 33/02, F02C 7/052

(54) **Inlet particle separator system**

(30) Priority: 30.11.2010 US 957282
(71) Applicant: General Electric Company, Schenectady, NY 12345 (US)
(72) Inventor: Kenyon, Ross Hartley, Niskayuna, NY New York 12309 (US); Joshi, Narendra Digamber, Niskayuna, NY New York 12309 (US); Evulet, Andrei Tristan, Niskayuna, NY New York 12309 (US)
(74) Representative: Williams, Andrew Richard

(57) **Abstract**

An inlet particle separator system is provided. The system includes an axial flow separator for separating air from an engine inlet into a first flow of substantially contaminated air and a second flow of substantially clean air. The system also includes a scavenge subsystem in flow communication with the axial flow separator for receiving the first flow of substantially contaminated air. Finally, the system includes a fluidic device disposed in flow communication with the first flow of substantially contaminated air for inducting air through the scavenge subsystem and the engine inlet.

## Description

### BACKGROUND

The invention relates generally to an inlet particle separator system and more particularly to a system and method of operating the inlet particle separator system having a fluidic device.

Generally, aircraft engines are susceptible to damage from foreign particulate matter introduced into air inlets of such engines. Mostly, vertical takeoff and landing (VTOL) aircraft engines such as helicopter gas turbine engines are vulnerable to damage due to smaller particulate matter like sand or ice. These VTOL aircrafts operate at various conditions where substantial quantities of sand or ice may become entrained in intake air supplied to the gas turbine engine and can cause substantial damage. For example, a helicopter engine operating at low altitudes over a desert looses performance rapidly due to erosion of the engine blades due to ingestion of sand and dust particles. In order to solve this problem, various inlet particle separator (IPS) systems have been developed for use with different kinds of gas turbine engines.

One means of providing highly effective separation is to mount a blower system with an engine inlet that centrifuges the inlet air entrained with particles before the air enters the engine core. Once the air is accelerated to a high centrifugal velocity with the particles entrained therein, relatively clean air can be drawn from an inner portion of the centrifugal flow into the core engine itself. Because of its density, the extraneous matter itself cannot be drawn radially inwardly as quickly as the air and instead the particles will tend to follow their original trajectory around an outer radius into a collection chamber. Also, a well designed IPS system using a mechanical blower may achieve a separation efficiency ( ηₛₑₚ) above 90%. Air flow rates through the mechanical blower may be between 10% and 30% of the air flow rates through the the engine core. However, such IPS system having the blower system has severe performance disadvantages due to constant operation during flight even in absence of particulate matter at higher alltitudes. Due to constant running of IPS blower, there is large consumption of power during flight at high altitudes. Also, the IPS system with a blower increases the overall cost in addition to weight of the IPS system, thereby, affecting the performance of the gas turbine engine. Furthermore, the life of the blower system is limited and requires frequent maintenance and potentially less expensive while delivering identical or better performance.

Therefore, there is an ongoing need for an inlet particle separator system that does away with a blower and is more efficient and reliable.

### BRIEF DESCRIPTION

In accordance with an embodiment of the invention, an inlet particle separator system is provided. The system includes an axial flow separator for separating air from an engine inlet into a first flow of substantially contaminated air and a second flow of substantially clean air. The system also includes a scavenge subsystem in flow communication with the axial flow separator for receiving the first flow of substantially contaminated air. Finally, the system includes a fluidic device disposed in flow communication with the first flow of substantially contaminated air for inducting air through the scavenge subsystem and the engine inlet.

In accordance with another embodiment of the invention, a fluidic device is provided. The fluidic device includes an inlet and a chamber for receiving a flow of compressed air from a compressor of a gas turbine engine. The fluidic device also includes a nozzle for providing a jet of compressed air into an inlet particle separator duct, wherein the inlet particle separator duct provides for a flow of substantially contaminated air. The fluidic device further includes one or more valves or a flow control device disposed at the inlet for controlling the flow of compressed air from the compressor.

In accordance with another embodiment of the invention, a method of operating an inlet particle separator system is provided. The method includes providing a fluidic device at any desired location on an inlet particle separator duct carrying a flow of substantially contaminated air. The method also includes providing compressed air into the inlet particle separator duct through a nozzle of the fluidic device. Further, the method includes inducing amplified flow of the substantially contaminated air into the inlet particle separator duct during operation of the fluidic device. Finally the method includes controlling one or more valves of the fluidic device for providing the compressed air based on a quantity of particulate content in the engine inlet air.

### DRAWINGS

These and other features, aspects, and advantages of the present invention will become better understood when the following detailed description is read with reference to the accompanying drawings in which like characters represent like parts throughout the drawings, wherein:
FIG. 1 is an elevation view, partly cut away, of an inlet particle separator system in accordance with an embodiment of the present invention.
FIG. 2 is a sectional view of a fluidic device in accordance with an embodiment of the present invention.
FIG. 3 is a flow chart of a method of operating an inlet particle separator system in accordance with an embodiment of the present invention.

### DETAILED DESCRIPTION

When introducing elements of various embodiments of the present invention, the articles "a," "an," "the," and "said" are intended to mean that there are one or more of the elements. The terms "comprising," "including," and "having" are intended to be inclusive and mean that there may be additional elements other than the listed elements. Any examples of operating parameters are not exclusive of other parameters of the disclosed embodiments.

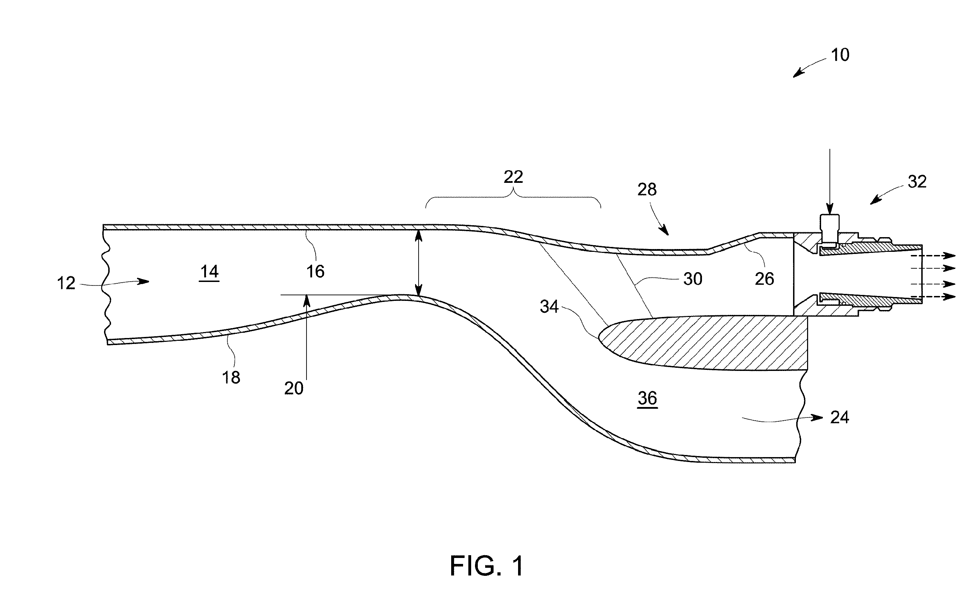

FIG. 1 shows an inlet particle separator system 10 in accordance with an embodiment of the present invention. The inlet particle separator system 10 is a unit that is designed to be mounted on the front end of an aircraft engine (not shown). In one embodiment, the inlet particle separator system 10 is a complete detachable unit. The function of the inlet particle separator 10 is to separate extraneous matter from engine inlet air and direct the resulting substantially cleaned air into the engine's core. As shown, outside air is drawn into the inlet particle separator 10 through an annular inlet 12. The incoming air flows through the annular inlet 12 through an intake passageway section 14, the outer boundary of which is formed by an outer casing 16. The inner boundary of the passageway section 14 is formed by a hub section 18. As shown, the diameter of the hub section 18 gradually increases in the downstream direction along the intake passageway 14. In a non-limiting manner, the degree to which the hub section 18 increases in diameter through the intake passageway section 14 can be varied somewhat.

The diameter of the hub section 18 continues to gradually increase until it reaches a point of maximum diameter 20, whereafter the hub diameter quickly drops off or decreases. This portion of the inlet particle separator 10 where the diameter is decreasing is described as a separation section 22. The separation section 22 is the region where extraneous matter in the engine inlet air physically separates thereby forming a first flow of substantially contaminated air and a second flow of substantially clean air that will eventually enter the engine's core (not shown). Separation of extraneous matter occurs in this region because the inlet air has been rapidly accelerated past the point of hub maximum diameter 20 and thereafter the air is rapidly turned radially inwardly to a compressor inlet 24. The engine's compressor is not shown to avoid unnecessary detail, but its location would be immediately downstream of the designated location of the compressor inlet 24.

The compressor will generally draw the air radially inwardly without excessive losses in flow efficiency. On the other hand, the extraneous matter which is entrained in the inlet air flow is made up of solid particles and is naturally denser than the gas flow stream within which it is entrained. Because it is denser (greater mass per unit of volume), the momentum of the extraneous matter will cause the particles to have a greater tendency to continue in their original direction of flow and will not make the sharp turn radially inwardly after the maximum hub diameter 20 as will the air itself. Therefore, the extraneous matter will tend to continue in an axial direction and will enter a passageway or duct 26.

In the separation section 22, the momentum of the solid particles constituting the extraneous matter prevents the particles from turning with the second flow of substantially clean air and continues with the first flow of substantially contaminated air in the passageway or duct 26. Before being drawn inwards into the duct 26, the first flow of substantially contaminated air enters a scavenge subsystem 28. Further, a splitter nose 34 separates the flowpath into the scavenge system 28 and a core engine flowpath 36. The scavenge subsystem 28 includes scavenge vanes 30. To achieve a high separation efficiency, the inlet particle separator system 10 has a flowpath that is designed such that the extraneous matter entrained in the incoming air does not enter the compressor inlet 24. Additionally, the scavenge subsystem 28 is designed to reduce the probability of extraneous matter bouncing forward back into the compressor inlet 24 after striking structural elements of the scavenge system 28.

Furthermore, the inlet particle separator system 10 includes a fluidic device 32 disposed at any desired location on the passageway or duct 26 that enhances the flow of substantially contaminated air into the scavenge subsystem 28. In one embodiment, the fluidic device 32 is a coanda-effect flow amplifier. The fluid flow through duct 26 increases the likelikhood that particles will enter the scavenge subsystem 28. In one embodiment, the fluid flow rates through duct 26, expressed as a fraction of fluid flow rates entering the compressor inlet through the core engine flowpath 36, may be in the range of about 5% to about 30%. Separation efficiencies above 90% may also be achieved with the inlet particle separator system 10 comparable to a well designed IPS system using a mechanical blower that may achieve a separation efficiency ( ηₛₑₚ) above 90%. Air flowrates through mechanical blowers of such IPS system may be between about 10% and about 30% of the air flowrates through the the engine core.

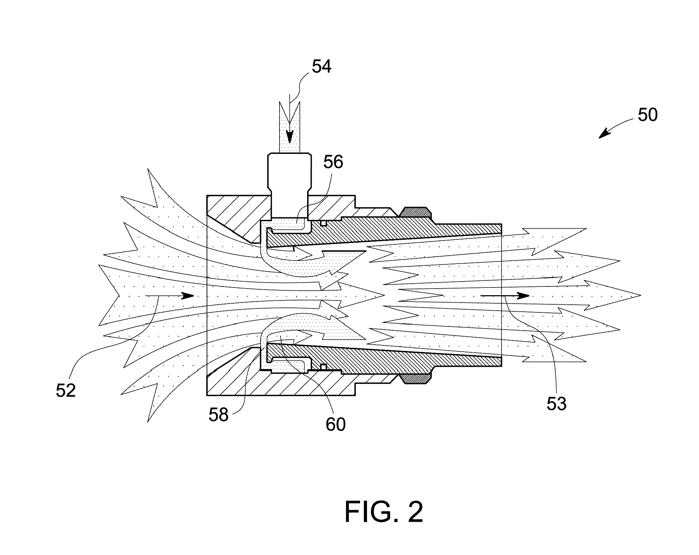

FIG. 2 shows a sectional view of a fluidic device 50 in accordance with an embodiment of the present invention. The fluidic device 50 is mounted at any desired location on a passageway or duct (shown as 26 in FIG. 1) for the flow of substantially contaminated air. In one embodiment, the fluidic device 50 is mounted at an optimum location on the passageway or duct (shown as 26 in FIG. 1) so as to achieve a high separation efficiency. As shown, the contaminated air enters through an inlet passage 52 and flows out of outlet 53 of the fluidic device 50. The fluidic device 50 includes an inlet 54 for receiving a flow of compressed air from a gas turbine engine. The compressed air may be supplied from a bleed port or anti-ice port of a compressor or a combustor of the gas turbine engine. In one embodiment, the inlet 54 is in communication with the bleed port that is provided at a thermodynamically desired location of the compressor. Alternatively, the compressed air may also be supplied from the turbine section of the gas turbine engine. Further, the compressed air flows into a chamber 56 and is then admitted through a ring nozzle 58 at high velocity into the duct carrying the first flow of substantially contaminated air. In one embodiment, the chamber 56 is an annular chamber. In another embodiment, the fluid flow rates through the inlet 54 of the fluidic device, expressed as a fraction of fluid flow rate through inlet passage 52 of the fluidic device, may be in the range of about 3% to about 30%. It is to be noted that the passageway inner wall of the fluidic device 50 has a coanda profile 60 near the nozzle 58 towards the outlet 53. The jet of compressed air flowing out of the nozzle 58 adheres to the coanda nozzle profile 60. This result in a low-pressure area at the center of inlet passage 52, thereby inducing accelerated flow of contaminated air in the passageway along with the jet of compressed air towards the outlet 53. The accelerated flow of contaminated air further causes the particles such as sand or dust or ice to be transported in a radially outward direction to be collected in a collection chamber (not shown). In one embodiment, the fluidic device 50 includes one or more valves for controlling the flow of compressed air into the duct based on a quantity of particulate matter in the engine inlet air. In another embodiment, the fluidic device 50 includes a flow control device for controlling the flow of compressed air into the duct based on a quantity of particulate matter in the engine inlet air. This is advantageous as the inlet particle separator system 10 (shown in FIG.1) attains the ability to be easily shut off or modulated when there is little or no particle present in the engine inlet air, thereby increasing the engine operation efficiency. In one embodiment, the fluidic device is activated or deactivated using a bleed valve or a damper located at a bleed port of the compressor.

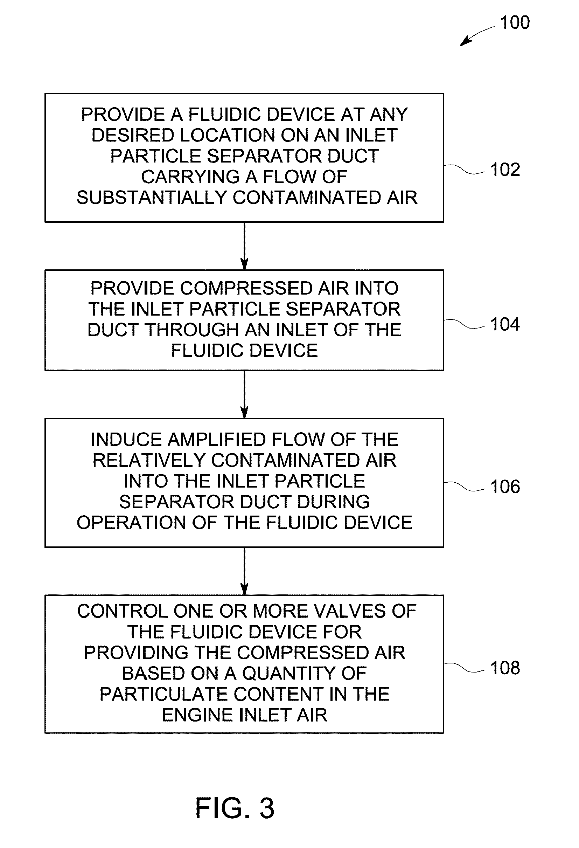

FIG. 3 shows a flow chart of a method 100 of operating an inlet particle separator system of a gas turbine engine in accordance with an embodiment of the present invention. At step 102, the method includes providing a fluidic device at any desired location on an inlet particle separator duct carrying a flow of substantially contaminated air. The fluidic device enables inducting air firstly through a scavenge subsystem of and further into the inlet particle separator duct carrying the first flow of substantially contaminated air. At step 104, the method includes providing compressed air into the inlet particle separator duct through a nozzle of the fluidic device. Further, at step 106, the method includes inducing amplified flow of the substantially contaminated air into the inlet particle separator duct during operation of the fluidic device. Finally at step 108, the method includes controlling one or more valves of the fluidic device for providing the compressed air based on a quantity of particulate content in the engine inlet air. In one embodiment, the one or more valves include a bleed port valve or a damper valve. The controlling of the one or more valves includes modulating the valves or completely shutting off the fluidic device depending upon the presence of small quantity of particles or absence of particulate matter in the engine inlet air respectively.

Advantageously, the present method and system enables the operation of the inlet particle separator system based on the quantity of contamination in the engine inlet air. Therefore, at high altitudes and in absence of extraneous matter, the system can be modulated or easily deactivated to save power and increase engine operation efficiency. Furthermore, the fluidic device of the inlet particle separator system causes additional separation of the particulate matter that is centrifuged in a radially outward direction due to accelerated flow of contaminated air. Also, the fluidic device instead of the blower in the inlet particle separator system is more economical and requires less maintenance since the device is more tolerant to sand particles passing through it unlike a blower that suffers from the problem of blade wear. Moreover, the weight of the present system is lighter and positively affects the efficiency of an aircraft engine. Further advantages of the present invention includes an improved engine packaging whereby, the inlet particle separator system is installed away from the gearbox.

Furthermore, the skilled artisan will recognize the interchangeability of various features from different embodiments. Similarly, the various method steps and features described, as well as other known equivalents for each such methods and feature, can be mixed and matched by one of ordinary skill in this art to construct additional systems and techniques in accordance with principles of this disclosure. Of course, it is to be understood that not necessarily all such objects or advantages described above may be achieved in accordance with any particular embodiment. Thus, for example, those skilled in the art will recognize that the systems and techniques described herein may be embodied or carried out in a manner that achieves or optimizes one advantage or group of advantages as taught herein without necessarily achieving other objects or advantages as may be taught or suggested herein.

Various aspects and embodiments of the invention are indicated in the following clauses:
1. An inlet particle separator system comprising:
   an axial flow separator for separating air from an engine inlet into a first flow of substantially contaminated air and a second flow of substantially clean air;
   a scavenge subsystem in flow communication with the axial flow separator for receiving the first flow of substantially contaminated air, and
   a fluidic device disposed in flow communication with the first flow of substantially contaminated air for accelerating the flow through the scavenge subsystem and the engine inlet.
2. The system of clause 1, wherein the fluidic device is a coanda-effect flow amplifier.
3. The system of either clause 1 or 2, wherein the fluidic device is mounted at any desired location on a duct for the first flow of substantially contaminated air.
4. The system of any preceding clause, wherein the fluidic device comprises: an inlet for receiving a flow of compressed air; an inlet passage for receiving the first flow of substantially contaminated air and an outlet passage for carrying the substantially contaminated air along with the compressed air.
5. The system of any preceding clause, wherein the fluidic device comprises a chamber for receiving a flow of compressed air.
6. The system of any preceding clause, wherein the fluidic device comprises a nozzle for admitting a jet of compressed air into the duct for the first flow of substantially contaminated air.
7. The system of any one of clauses 4 to 6, wherein the compressed air is supplied from a compressor or a combustor or a turbine of a gas turbine engine.
8. The system of clause 4, wherein the inlet of the fluidic device is in communication with a bleed port of the compressor or a turbine.
9. The system of clause 4, wherein the inlet of the fluidic device is in communication with an anti-ice port or a start bleed port of the compressor of the gas turbine engine.
10. The system of clause 4, wherein the inlet is in communication with a port provided at a thermodynamically desired location of the compressor of the gas turbine engine.
11. The system of any preceding clause, further comprises one or more control valves for modulating operation of the fluidic device.
12. The system of clause 11, wherein the one or more control valves comprises a bleed valve or a damper located at a bleed port of the compressor for activating or deactivating the fluidic device.
13. The system of clause 4, wherein the inlet of the fluidic device comprises one or more valves or a flow control device for controlling the flow of compressed air into the duct for the first flow of substantially contaminated air.
14. A fluidic device, comprising;
   an inlet and a chamber for receiving a flow of compressed air from a compressor or combustor or turbine of a gas turbine engine;
   a nozzle for admitting a jet of compressed air into an inlet particle separator duct, wherein the inlet particle separator duct provides for a flow of substantially contaminated air; and
   one or more valves or a flow control device disposed at the inlet for controlling the flow of compressed air from the compressor.
15. The fluidic device of clause 14, wherein the fluidic device is mounted at any desired location on the inlet particle separator duct.
16. The fluidic device of either of clause 14 or 15, wherein the inlet is in communication with a port provided at a thermodynamically desired location of the compressor of the gas turbine engine.
17. The fluidic device of claiuse 16, wherein the port is an anti-ice port or a start bleed port of the compressor of the gas turbine engine.
18. A method of operating an inlet particle separator system, comprising:
   providing a fluidic device at any desired location on an inlet particle separator duct carrying a flow of substantially contaminated air;
   providing a jet of compressed air into the inlet particle separator duct through a nozzle of the fluidic device;
   inducing amplified flow of the substantially contaminated air into the inlet particle separator duct during operation of the fluidic device; and
   controlling one or more valves of the fluidic device for providing the compressed air based on a quantity of particulate content in the engine inlet air.
19. The method of clause 18, further comprises providing the fluidic device for inducting air through a scavenge subsystem of a gas turbine engine inlet and further into the inlet particle separator duct carrying the first flow of substantially contaminated air.
20. The method of either of clause 18 or 19, wherein controlling the one or more valves further comprises activating or deactivating the one or more valves based on the quantity of particulate content in the gas turbine engine inlet air.

## Claims

1. An inlet particle separator system (10) comprising:
an axial flow separator (22) for separating air from an engine inlet (12) into a first flow of substantially contaminated air and a second flow of substantially clean air;
a scavenge subsystem (28) in flow communication with the axial flow separator (22) for receiving the first flow of substantially contaminated air, and
a fluidic device (32,50) disposed in flow communication with the first flow of substantially contaminated air for accelerating the flow through the scavenge subsystem (28) and the engine inlet (12).

2. The system of claim 1, wherein the fluidic device is a coanda-effect flow amplifier.

3. The system (10) of either of claim 1 or 2, wherein the fluidic device (32,50) is mounted at any desired location on a duct (26) for the first flow of substantially contaminated air.

4. The system (10) of any preceding claim, wherein the fluidic device (32,50) comprises: an inlet (54) for receiving a flow of compressed air; an inlet passage (52) for receiving the first flow of substantially contaminated air and an outlet passage (53) for carrying the substantially contaminated air along with the compressed air.

5. The system (10) of any preceding claim, wherein the fluidic device (32,50) comprises a chamber (56) for receiving a flow of compressed air.

6. The system (10) of any preceding claim, wherein the fluidic device (32,50) comprises a nozzle (58) for admitting a jet of compressed air into the first flow of substantially contaminated air.

7. The system (10) of any one of claims 4 to 6, wherein the compressed air is supplied from a compressor or a combustor or a turbine of a gas turbine engine.

8. The system (10) of claim 4, wherein the inlet (54) of the fluidic device (32,50) is in communication with a bleed port of the compressor or a turbine.

9. The system (10) of claim 4, wherein the inlet (54) of the fluidic device (32,50) is in communication with an anti-ice port or a start bleed port of the compressor of the gas turbine engine.

10. The system (10) of claim 4, wherein the inlet (54) is in communication with a port provided at a thermodynamically desired location of the compressor of the gas turbine engine.

11. The system (10) of any preceding claim, further comprises one or more control valves for modulating operation of the fluidic device (32,50).

12. The system (10) of claim 11, wherein the one or more control valves comprises a bleed valve or a damper located at a bleed port of the compressor for activating or deactivating the fluidic device (32,50).

13. The system (10) of claim 4, wherein the inlet (54) of the fluidic device (32,50) comprises one or more valves or a flow control device for controlling the flow of compressed air into the first flow of substantially contaminated air.

14. A fluidic device (32,50) for use with the inlet particle separator system (10) of claims 1 to 13, comprising;
an inlet (54) and a chamber (56) for receiving a flow of compressed air from a compressor or combustor or turbine of a gas turbine engine;
a nozzle (58) for admitting a jet of compressed air into an inlet particle separator duct (26), wherein the inlet particle separator duct provides for a flow of substantially contaminated air; and
one or more valves or a flow control device disposed at the inlet for controlling the flow of compressed air from the compressor.

15. A method (100) of operating an inlet particle separator system (10), comprising:
providing (102) a fluidic device at any desired location on an inlet particle separator duct carrying a flow of substantially contaminated air;
providing (104) a jet of compressed air into the inlet particle separator duct through a nozzle of the fluidic device;
inducing (104) amplified flow of the substantially contaminated air into the inlet particle separator duct during operation of the fluidic device; and
controlling (108) one or more valves of the fluidic device for providing the compressed air based on a quantity of particulate content in the engine inlet air.
